# EUROPEAN PATENT SPECIFICATION

(11) **EP 1 676 048 B1**
(45) Date of publication and mention of the grant of the patent: **10.12.2008**
(21) Application number: 04769222.3
(22) Date of filing: 31.08.2004
(51) Int. Cl.: F16F 9/54, F16C 11/04

(54) **ARTICULATED ATTACHMENT DEVICE FOR A GAS SPRING**
GELENKBEFESTIGUNGSVORRICHTUNG FÜR EINE GASFEDER
DISPOSITIF ARTICULE DE FIXATION POUR UN RESSORT A GAZ

(30) Priority: 03.10.2003 IT UD20030197
(43) Date of publication of application: 05.07.2006
(73) Proprietor: Vapsint Srl, 31010 Godega S. Urbano (IT)
(72) Inventor: PAGOTTO, Angelo, I-31010 Orsago (IT); PAGOTTO, Margherita, I-31010 Godega S. Urbano (IT)
(74) Representative: Petraz, Davide Luigi
(86) International application number: PCT/IB2004/002808
(87) International publication number: WO 2005/033549

(56) References cited:
- US-A- 4 305 614
- US-A- 5 626 433
- US-A- 5 833 383
- PATENT ABSTRACTS OF JAPAN vol. 2003, no. 05, 12 May 2003 (2003-05-12) & JP 2003 003734 A (GOAL CO LTD), 8 January 2003 (2003-01-08)

## Description

### FIELD OF THE INVENTION

The present invention concerns an articulated attachment device, with a fixed or adjustable axis of rotation, to connect a shaft of a gas spring to a component of a closing structure. To be more exact, the attachment device in the adjustable version allows to selectively adjust the position of the shaft of the gas spring with respect to the component of the closing structure, and can be associated with any closing structure consisting of a fixed component and a movable component, such an for example the frame and the movable part of a furnishing element, of a losing element, a door, a gate, or the door of a means of transport, or suchlike.

### BACKGROUND OF THE INVENTION

An articulated attachment device is known, able to connect the shaft of a gas spring to a component of a closing structure, such as for example a frame of a furnishing element, which allows the spring to rotate around an axis passing through its point of attachment, when said structure is opened or closed.

The attachment device comprises a first element attached to the component of a closing structure in a determinate position and a second element connected to the articulation of the gas spring. Between the two elements a third connection element is interposed, of the articulated type, which allows the shaft of the spring to rotate with respect to the first element.

The known device has the disadvantage, however, that the articulated connection element is complex and costly to make.

An attachment device of an adjustable type is also known, which, apart from allowing the gas spring to rotate with respect to the component of the closing structure, also allows to adjust the point of attachment of the gas spring itself, so as to adapt its rotation to the rotational movement of a movable component of the closing structure.

This second known device is not articulated and is also very complex because it consists of many components, such as: a tubular element inside which the threaded end of the gas spring is partly housed; a plate attached to the component of the supporting structure; a connection element attached orthogonally on the circular wall of the tubular element; a sliding carriage housed inside the plate; and a body able to allow a further adjustment of the axial position of the end of the spring, and provided with an element that links said body to the end of the spring. The connection element is pivoted in the carriage and the latter is provided with a notched bar able to cooperate with a corresponding notched bar fixed inside the plate. In order to be able to adjust the position of the end of the gas spring with respect to the plate, the carriage is momentarily loosened with respect to the connection element, so that it can slide inside the plate, as far as a determinate reciprocal position of the notched bars

The second known attachment device, although it has a multiplicity of functions and although it achieves a fine adjustment of the attachment point of the gas spring, has the disadvantage that it is complex and costly to make, as it consists of a large number of components, all made of metal, which require accurate and precise working. Moreover, due to these complexities, the second known attachment device has the disadvantage that it is not very practical to handle for the final user, it is not articulated and consequently it adapts with difficulty to the movements of opening and closing of the component with which it is associated.

From US-A-5,626,433 it is also known an attachment device comprising a ball joint formed of a joint element having a ball holder with a through hole, a plurality of ball abutting ribs projecting inwardly from an inner surface of the ball holder, a ring-shaped projecting stand formed at a lower part of the ball holder to extend along a periphery of the inner surface of the ball holder, a fitting ring disposed on the projecting stand, and a rotation preventing rib projecting inwardly from the inner surface of the ball holder. The fitting ring is elastically deformable and has a slit. The rotation preventing rib is placed in the slit of the fitting ring to thereby prevent the fitting ring from moving on the projecting stand. A ball stud having a spherical fitting part can be further disposed between the fitting ring and the ball abutting ribs. This known attachment device has the disadvantages that is complex and costly to make, as it consists of a large number of components.

One purpose of the present invention is to achieve an articulated attachment device, with a fixed or adjustable rotation pin, to connect a shaft of a gas spring to a component of a closing structure, which is simple and consists of a very limited number of components, and which at the same time is robust, safe and reliable.

Another purpose of the present invention is to achieve an articulated attachment device which can be easily and quickly installed even by any user, and allows the user to adjust the position of the shaft of the gas spring with a few, simple operations.

A further purpose of the present invention is to achieve an articulated attachment device for a gas spring which will allow the latter to move with a great degree of freedom, apart from around its axis of rotation, in order to adapt to the movements of the closing structure with which it is associated.

Applicant has devised, tested and embodied the present invention to achieve these and other purposes, to obtain further advantages and to overcome the shortcomings of the state of the art.

### SUMMARY OF THE INVENTION

The present invention is set forth and characterized in the main claim, while the dependent claims describe other characteristics of the present invention or variants to the main inventive idea.

In accordance with the above purposes, an articulated attachment device according to the present invention able to connect the shaft of a gas spring to a component of a closing structure comprises a first element able to be attached to the component in a determinate position, and a second element able to be connected to the shaft of the gas spring. According to the invention, the first element comprises, or is associated with, pivoting means for said second element; the second element comprises a first substantially cylindrical seating, inside which said pivoting means are inserted, and a second substantially radial seating, into which the end of the shaft is able to be inserted.

Advantageously, the second seating comprises a first portion with a substantially cylindrical shape able to allow the shaft to be inserted axially, and a second portion orthogonal with respect to said first portion.

The shaft can thus oscillate between an insertion/removal position and a working position, in which it is perpendicular to the axis of rotation of the second element. The shaft of the gas spring can therefore both rotate with respect to the axis of rotation, and also incline with respect tp the latter, thus achieving an articulated movement while it rotates around said axis.

In a first embodiment, the pivoting means comprise a third element which is autonomous with respect to the first and second element. The third element comprises a pin having a determinate axis of pivoting, which is coupled with a corresponding third seating made in the first element. The third element also comprises means that are eccentric with respect to said axis of pivoting and that cooperate with said first seating, in order to adjust the axial position of said second element with respect to the first element, by means of a selective rotation of the third element with respect to the first element.

Advantageously, the third element is attached to the first element by means of corresponding attachment means, and adjustment is effected by momentarily loosening the attachment means so as to allow the third element to rotate around its axis of pivoting.

In this way we obtain, in this first embodiment, an articulated attachment device of an adjustable type and having only three components, wherein, by acting only on the rotation of the third element, and in a very simple way, it is possible to determine a linear displacement of the second element connected to the shaft of the gas spring.

According to another characteristic of the present invention, the first element comprises first angular positioning means, such as notches, teeth or similar elements, which are able to cooperate with mating second angular positioning means made on the third element, and allow to define on each occasion the angular position of the third element when it is rotated around its axis of pivoting, thus facilitating a user in performing the operation.

According to another characteristic of the present invention, both the first and the second and the third element are made by molding plastic material; they are thus easy to make and have a limited cost.

In a second embodiment, the pivoting means comprises a substantially cylindrical pin made in a piece in said first element, and around which the second element can freely rotate.

Moreover, advantageously, the pivoting means are inserted with play inside the first seating, so as to allow the gas spring to move and oscillate with a great degree of freedom with respect to the pivoting means.

In this way we obtain an articulated attachment device that is simple to construct, with only two elements, and which at the same time allows the spring to have movements with different degrees of freedom.

The product can in any case be constructed with metal materials by means of molding, and it is still economic because it is not necessary to perform other mechanical workings and the parts are easy to assemble.

### BRIEF DESCRIPTION OF THE DRAWINGS

These and other characteristics of the present invention will become apparent from the following description of two preferential forms of embodiment, given as a non-restrictive example with reference to the attached drawings wherein:
- fig. 1 shows an articulated attachment device according to the invention, associated with a gas spring;
- fig. 2 is a vertical section of the device in fig. 1;
- fig. 3 is a three-dimensional view from below of the device in fig. 1;
- fig. 4 is a view of the device in fig. 2 in its dis-assembled condition;
- fig. 5 is a plane view of a second element of the device in fig. 1;
- fig. 6 is a plane view of a third element of the device in fig. 1;
- fig. 7 is a three-dimensional view of the third element in fig. 6;
- fig. 8 is a section of a variant of the device in fig. 2;
- fig. 9 shows the device in fig. 8 in its dis-assembled condition.

### DESCRIPTION OF TWO PREFERENTIAL FORMS OF EMBODIMENT OF THE INVENTION

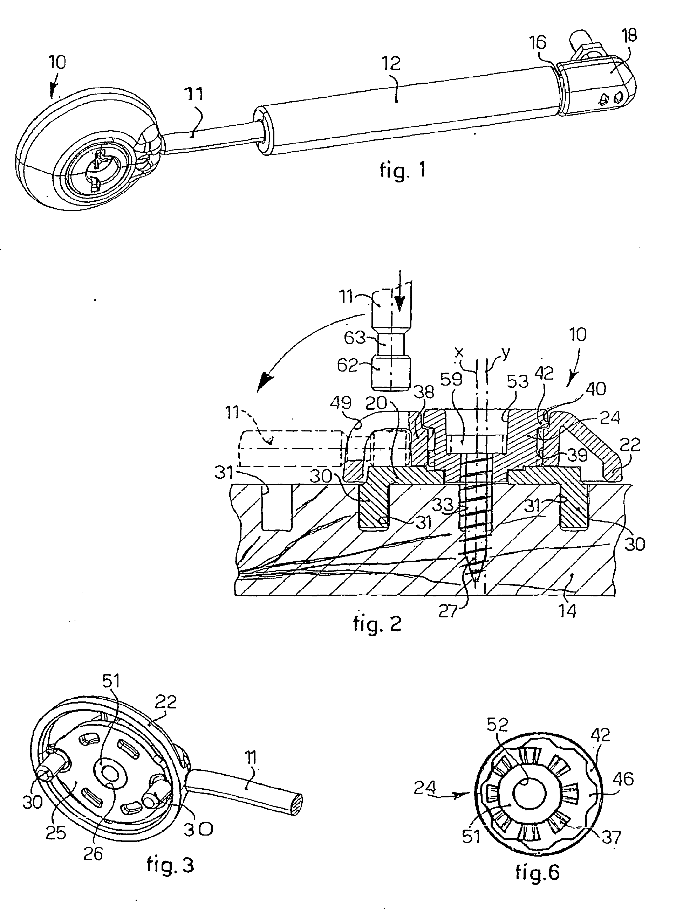

With reference to figs. 1, 2, 8 and 9 an articulated attachment device 10, 110 according to the present invention is able to connect a shaft 11 of a gas spring 12 to a component 14, such as for example the frame of a furnishing element. The gas spring 12 is connected with the opposite end 16 to the movable component, such as for example a movable part of the furnishing element, by means of another attachment device 18, such as for example the one described in a parallel patent application for an industrial invention filed at the same time by the same Applicant.

It is clear that the articulated attachment device 10, 110 according to the present invention and the attachment device 18 can be inverted and be attached respectively one to the movable part and the other to the frame.

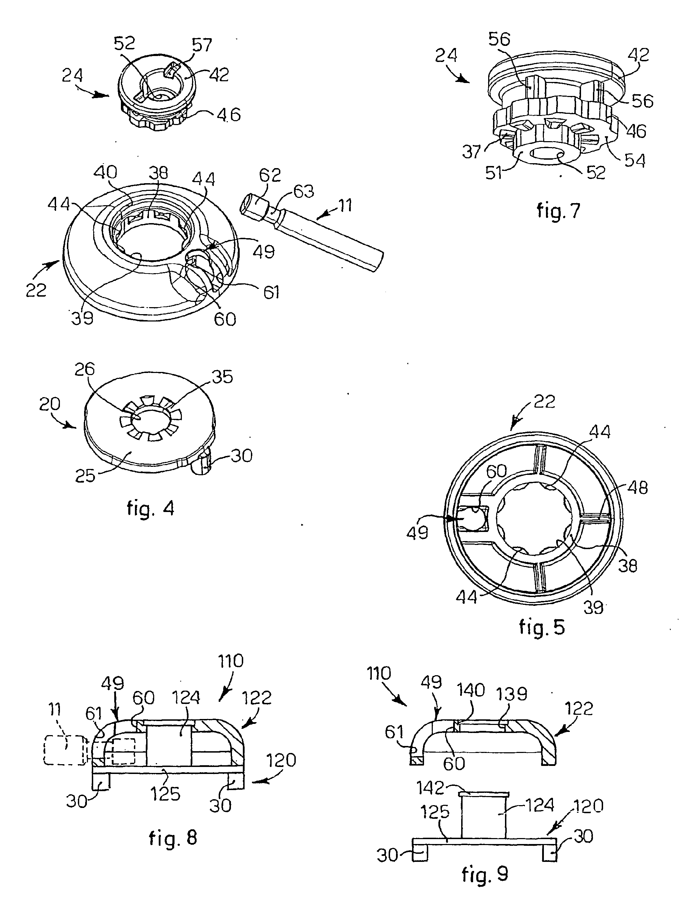

Both in a first embodiment shown in figs. 2 and 4, and also in a second embodiment shown in fig. 8, the articulated attachment device 10, 110 comprises a first element 20, 120 attached to the component 14, a second element 22, 122 connected directly to the shaft 11 of the gas spring 12, and a third element 24, 124 solid with the first element 20, 120. The third element 24, 124 is advantageously arranged with play inside a substantially cylindrical seating 39, 139 (figs. 4, 5 and 9) made respectively in the second element 22, 122, functioning as a pivoting element for the second element 22, 122.

The three elements 20, 120, 22, 122, 24, 124 are advantageously made by molding plastic or metal material.

In the first embodiment, shown in figs. 2 to 7, the third element 24 is autonomous with respect to the other elements 20, 21 and is joined to the first element 20 by means of.a screw 27, while in the second embodiment (figs. 8 and 9), described hereafter, the third element 124 is made in a single piece in the first element 120.

The first element 20 (figs. 3 and 4) comprises a plane disk 25, which has a central hole 26 and, on the lower side, facing towards the component 14, a pair of pegs 30, aligned with each other at the sides of the central hole 26 and inserted in two corresponding holes 31 made in the component 14 (fig. 2). In this case, the component 14 comprises a series of aligned holes 31, 33, and the first element 20 is sized so that the pegs 30 are inserted into two holes 31 separated from each other by an intermediate hole 33 into which the screw 27 is inserted.

On the upper side of the plane disk 25 a plurality of front teeth 35 (fig. 4) are also made in a single piece, which are arranged spoke-like, radially equidistant from each other, around the central hole 26; they function as angular positioning means for corresponding front teeth 37 made on the third element 24, as will be described hereafter.

The second element 22 is substantially cap-shaped and is able to rotate freely with respect to the other elements 20, 24 around a determinate axis Y, in order to allow the gas spring 12 to rotate. The second element 22 comprises a central body 38, in which said seating 39 is made, to house the third element 24. The latter is inserted in this case from above.

In proximity with its upper edge, the central body 38 has a circular hollow 40, cooperating with play with a mating ridge 42 (figs. 2, 4 and 7) of the third element 24, which is able to contain and guide the second element 22 during its rotation around the axis Y, also allowing it to make oscillatory movements with respect to the axis Y.

The second element 22 also comprises, below the circular hollow 40, a crown of radial teeth 44, made in a piece on the inner surface of the central body 38, and between which, during the assembly of the device 10, mating radial teeth 46 (fig. 7) made on the outer surface of the third element 24 are able to transit, thus to guide the insertion of the latter.

The second element 22 also has on its inner side a plurality of reinforcement ribs 48, and on its upper side a radial seating 49, in which the shaft 11 of the gas spring 12 is housed, and which will be described hereafter.

The third element 24 (figs. 2, 4 and 7) comprises a main body 50, substantially cylindrical in shape, in which a through hole 52 is made for housing the screw 27, and an inner seating 53 where the head 59 of the screw 27 is housed. The main body 50 also comprises vertical reinforcement ribs 56 and, on its upper side, hollows 57 to house a tool suitably two make the third element 24 rotate after a possible loosening of the screw 27.

The third element 24 comprises at the lower part a pin 51, with an axis of pivoting X, which is inserted into the central hole 26 of the first element 20, and an outer ring 54 made in a piece therewith, in a substantially central zone of the cylindrical surface of the main body 50. The outer ring 54 comprises on its lower side the angular positioning front teeth 37 as mentioned above, which in this case are concentric with respect to the axis of pivoting X; in correspondence with its outer edge, the outer ring 54 has said radial teeth 46, which are able to cooperate with the seating 39 of the second element 22.

According to a characteristic of the present invention, the outer ring 54 is eccentric with respect to the axis of pivoting X. Thanks to the eccentricity of the outer ring 54, the axis of pivoting X is offset with respect to the axis of rotation Y of the second element 22, and this allows to adjust the position of the gas spring 12 simply by rotating the third element 24 with respect to the first element 20.

To be more exact, in a first moment, the screw 27 is loosened and, with the aforementioned tool, the third element 24 is made to rotate around the axis of pivoting X, determining a linear displacement of the axis of rotation Y of the second element 22. The third element 24 is rotated continuously, controlling its angular position by means of reciprocal coupling of the front teeth 37 with the front teeth 35 of the first element 20, until the axis of rotation Y of the second element 22 is displaced to a determinate position. When this position is reached, the third element 24 is again attached to the first element 20 by re-tightehing the screw 27.

In this way we obtain a fine adjustment of the position of the shaft 11 of the gas spring 12 with respect to the first element 20 attached to the component 14, simply by rotating the third element 24 with respect to its axis of pivoting X. The adjustment can thus be made without particular difficulties by any user.

Moreover, the device 10 has the advantage that it has a limited number of elements which, since they are all made by molding plastic material, do not require particular working or precision working.

According to another characteristic of the present invention, the connection of the shaft 11 of the gas spring 12 is also easy to make and does not require a complex working of the components. Moreover, this connection allows the shaft 11 of the gas spring 12 to oscillate, thus forming, with the movement of rotation around the axis Y, an articulated attachment.

In fact, the radial seating 49 mentioned above has a first portion 60 (figs. 4 and 5), substantially cylindrical and parallel to the axis of rotation Y, and a horizontal groove 61, orthogonal to the first portion 60. The shaft 11 is shaped, to be more exact, so as to have one end 62 also cylindrical in shape and a circular throat 63.

The end 62 of the shaft 11 is inserted axially into the first portion 60 (fig. 2) and subsequently the shaft 11 is inclined by about 90°, so as to stably insert the circular throat 63 inside the horizontal groove 61.

It is clear, however, that modifications and/or additions of parts may be made to the articulated attachment device 10 as described heretofore, without departing from the field and scope of the present invention.

For example, in the second embodiment shown in figs. 8 and 9, which is simpler than the first one in that no adjustment is provided, the third element 124 comprises a substantially cylindrical pin which, as we said, is made in a single piece in the first element 120.

The second element 122 is inserted from above in snap-in manner into the third element 124 until a circular ridge 142 is made to couple in a corresponding hollow 140 made in the seating 139.

In this embodiment too, the device 110 comprises said radial seating 49 to connect the shaft 11 of the gas spring 12 and the pegs 30, solid with the first element 120, in order to insert them into corresponding holes 31 made in the component 14 of the closing structure.

In this way we obtain an articulated attachment device 110 of great constructional simplicity, comprising only two distinct components, which allows at the same time a stable attachment and freedom of movement of the shaft 11 of the gas spring 12.

It is also clear that, although the present invention has been described with reference to specific examples, a person of skill in the art shall certainly be able to achieve many other equivalent forms of articulated attachment device, all of which shall come within the field and scope of the present invention, as defined in the appended claims.

## Claims

1. Articulated attachment device for connecting a shaft (11) of a gas spring (12) to a component (14) of a closing structure, comprising a first element (20) to be attached to said component (14) an a determinate position, a second element (22) connectable to said shaft (11) of the gas spring (12), and a third element (24) that comprises a pivoting means (54) for said second element (22), wherein said second element (22) comprises a substantially cylindrical first seating (39) inside which said third element (24) is inserted, and a substantially radial second seating (49) into which the end (62, 63) of said shaft (11) of the gas spring (12) can be inserted, **characterized in that** said third element (24) is attached to the first element (20) by attachment means and, by momentary loosening of said attachment means, may be rotated with respect thereto, said pivoting means (54) being arranged eccentrically with respect to the axis of pivoting (51) of said third element in said first element, and **in that** said second seating (49) comprises a first portion (60) with a substantially cylindrical shape to allow said shaft (11) to be inserted axially, and a second portion (61), orthogonal with respect to said first portion (60) and in communication therewith, said second seating (49) allowing said shaft (11) to oscillate between art insertion/removal position and a working position, in which said shaft (11) is perpendicular to the axis of rotation (Y) of said second element (22, 122), whereby said shaft (11) of the gas spring (12) can both rotate and incline with respect to said axis of rotation (Y).

2. Articulated attachment device for connecting a shaft (11) of a gas spring (12) to a component (14) of a closing structure, comprising a first element (120) to be attached to said component (14) in a determinate position, a second element (122) connectable to said shaft (11) of the gas spring (12), and pivoting means (124) for said second element (122), wherein said second element (122) comprises a first seating (139), inside which said pivoting means (124) are inserted, and a substantially radial second seating (49), into which the end (62, 63) of said shaft (11) of the gas spring (12) can be inserted, **characterized in that** said pivoting means comprise a substantially cylindrical pin (124) made in a piece in said first element (120) and around which the second element (122) can freely rotate and **in that** said second seating (49) comprises a first portion (60) witch a substantially cylindrical shape to allow said shaft (11) to be inserted axially, and a second portion (61), orthogonal with respect to said first portion (60) and in communication therewith, said second seating (49) allowing said shaft (11) to oscillate between an insertion/removal position and a working position, in which said shaft (11) is perpendicular to the axis of rotation (Y) of said second element (122), whereby said shaft (11) of the gas spring (12) can both rotate and incline with respect to said axis of rotation (Y).

3. Device as in claim 1, **characterized in that** said third element (24) is attached by means of corresponding attachment means (27) to said first element (20) and **in that** said attachment means (27) are able to be selectively loosened in order to allow said rotation of said third element (24) around said axis of pivoting (X).

4. Device as in claim 3, **characterized in that** said third element (24) comprises a main body (50) having a substantially cylindrical shape, on the outer surface of which said eccentric means (46, 54) are made.

5. Device as in claim 4, **characterized in that** said eccentric means comprise a circular ring (54) having on its outer edge a plurality of radial teeth (46).

6. Device as in any claim from 3 to 5 inclusive, **characterized in that** said first element (20) comprises first angular positioning means (35) able to cooperate with mating second angular positioning means (37) of said third element (24), in order to define the angular position of said third element (24) around said axis of pivoting (x).

7. Device as in claim 6, **characterized in that** said first and said second angular positioning means comprise front teeth or notches (35, 37) arranged spoke-like around said axis of pivoting (X).

8. Device as in claim 6 or 7, **characterized in that** said first and said second angular positioning means (35, 37) are concentric with respect to said axis of pivoting (X).

9. Device as in any claim hereinbefore, **characterized in that** said pivoting means (24, 124) are provided with a circular ridge (42, 142) able to cooperate with play with a mating hollow (40, 140) made in said first seating (39, 139).

10. Device as in claims 2 and 9, **characterized in that** said pin (124) is inserted in snap-in manner in said first seating (139).

11. Device as in any claim hereinbefore, **characterized in that** said first element (20, 120) comprises a plane disk (25, 125) provided on one side with coupling means (30) able to be attached in mating holes (31) made in said component (14).

12. Device as in claims 3 and 11, **characterized in that** said coupling means comprise two pegs (30), arranged aligned and on opposite sides with respect to said seating (26) and suitably distance from each other so as to be inserted into two determinate holes (31) of said component (14), and **in that** said attachment means (27) are able to be inserted into an intermediate hole (33) between said two determinate holes (31).

13. Device as in any claim hereinbefore, **characterized in that** both said first element (20, 120) and also said second element (22, 122) and also said pivoting means (24, 124) are obtained by molding plastic material.

## Patentansprüche

1. Gelenkige Befestigungsvorrichtung zum Verbinden eines Schafts (11) einer Gasfeder (12) mit einem Bauteil (14) einer Schließanordnung, welche Befestigungsvorrichtung ein erstes Element (20), das in einer bestimmten Position an das Bauteil (14) angesetzt werden soll, ein zweites Bauteil (22), das mit dem Schaft (11) der Gasfeder (13) verbindbar ist, und ein drittes Bauteil (24) mit einer Schwenkeinrichtung (54) für das zweite Bauteil (22) aufweist, wobei das zweite Element (22) eine im Wesentlichen zylindrische erste Aufnahme (39), in die das dritte Bauteil (24) eingesetzt ist, und eine im Wesentlichen radiale zweite Aufnahme (49) aufweist, in die das Ende (62, 63) des Schafts (11) der Gasfeder (12) einsetzbar ist, **dadurch gekennzeichnet, dass** das dritte Bauteil (24) mittels einer Ansetzeinrichtung an das erste Bauteil (20) angesetzt ist und sich durch momentanes Lösen der Ansetzeinrichtung relativ zu dieser verdrehen lässt, wobei die Schwenkeinrichtung (54) bezüglich der Schwenkachse (51) des dritten Bauteils im ersten Bauteil exzentrisch angeordnet ist, und dass die zweite Aufnahme (49) einen ersten Teil (60) im Wesentlichen zylindrischer Gestalt, damit der Schaft (11) axial einsetzbar ist, sowie einen zweiten Teil (61) aufweist, der rechtwinklig zum ersten Teil (60) und in Durchgangsverbindung mit ihm liegt, wobei die zweite Aufnahme (49) dem Schaft (11) erlaubt, zwischen einer Einsetz-/Entnahme- und einer Arbeitsposition hin- und herzuschwingen, in der der Schaft (11) rechtwinklig zur Drehachse (Y) des zweiten Elements (72, 122) verläuft, wobei der Schaft (11) der Gasfeder (12) sich relativ zur Drehachse (Y) sowohl drehen als auch neigen kann.

2. Gelenkige Befestigungsvorrichtung zum Verbinden eines Schafts (11) einer Gasfeder (12) mit einem Bauteil (14) einer Schließanordnung, welche Befestigungsvorrichtung ein erstes Element (120), das in einer bestimmten Lage an das Bauteil (14) angesetzt werden soll, ein zweites Bauteil (122), das mit dem Schaft (11) der Gasfeder (12) verbindbar ist, und Schwenkeinrichtungen (124) für das zweite Element (122) aufweist, wobei das zweite Element (122) eine erste Aufnahme (139), in die die Schwenkeinrichtungen eingesetzt werden, und eine im Wesentlichen radiale zweite Aufnahme (49) aufweist, in die das Wende (62, 63) des Schafts (11) der Gasfeder (12) einsetzbar ist, **dadurch gekennzeichnet, dass** die Schwenkeinrichtungen einen im Wesentlichen zylindrischen Stift (124) aufweisen, der mit dem ersten Bauteil (120) in diesem angeordnet ist und um den das zweite Bauteil (122) frei drehen kann, dass die zweite Aufnahme (49) einen ersten Teil (60) im Wesentlichen zylindrische Gestalt, in den der Schaft (11) axial einsetzbar ist, und einen zweiten Teil (60) hat. der rechtwinklig zum ersten Teil (60) ist und mit diesem In Durchgangsverbindung steht, wobei die zweite Aufnahme (49) den Schaft (11) zwischen einer Einsetz-/Entnahme- und eine Arbeitsposition hin- und herschwingen lässt, in der der Schaft (11) rechtwinklig zur Drehachse (Y) des zweiten Bauteils (122) liegt, wodurch der Schaft (11) der Gasfeder (12) sich bezüglich der Drehachse (Y) sowohl drehen als auch neigen kann.

3. Vorrichtung nach Anspruch 1, **dadurch gekennzeichnet, dass** das dritte Bauteil (24) mittels entsprechender Ansetzeinrichtungen (27) an das erste Bauteil (20) angesetzt ist und seine Ansetzeinrichtungen (27) wahlweise lösbar sind, um ein Drehen des dritten Bauteils (24) um die Schwenkachse (X) zuzulassen.

4. Vorrichtung nach Anspruch 3, **dadurch gekennzeichnet, dass** das dritte Bauteil (24) einen Hauptteil (50) im Wesentlichen zylindrischer Gestalt hat, auf dessen Außenfläche die exzentrischen Einrichtungen (46, 54) ausgebildet sind.

5. Vorrichtung nach Anspruch 4, **dadurch gekennzeichnet, dass** die exzentrische Einrichtung einen kreisrunden Ring (54) mit einer Vielzahl radialer Zähne (46) auf seiner Außenkante aufweist.

6. Vorrichtung nach einem der Ansprüche 3 bis 5, **dadurch gekennzeichnet, dass** das erste Bauteil (20) eine erste Winkelpositioniereinrichtung (35) aufweist, die mit einer komplementären zweiten Winkelpositioniereinrichtung (37) des dritten Bauteils (24) zusammenwirken kann, um die Winkellage des dritten Bauteils (24) um die Schwenkachse (X) zu bestimmen.

7. Vorrichtung nach Anspruch 6, **dadurch gekennzeichnet, dass** die erste und die zweite Winkelpositioniereinrichtung jeweils vordere Zähne oder Kerben (35, 37) aufweisen, die speichenartig um die Schwenkachse (X) herum angeordnet sind.

8. Vorrichtung nach Anspruch 6 oder 7, **dadurch gekennzeichnet, dass** die erste und die zweite Winkelpositioniereinrichtung (35, 37) relativ zur Schwenkachse (X) konzentrisch angeordnet sind.

9. Vorrichtung nach einem der vorgehenden Ansprüche, **dadurch gekennzeichnet, dass** die Schwenkeinrichtungen (24, 124) jeweils mit einer krelsrunden Schulter (42,142) versehen sind, die mit einer komplementären Ausnehmung (40, 140) in der ersten Aufnahme (39, 139) mit Spiel zusammenwirken kann.

10. Vorrichtung nach Anspruch 2 und 9, **dadurch gekennzeichnet, dass** der Stift (124) in die erste Aufnahme (139) eingerastet ist.

11. Vorrichtung nach einem der vorgehenden Ansprüche, **dadurch gekennzeichnet, dass** das erste Bauteil (20, 120) eine eben Scheibe (25, 125) aufweist, die auf einer Seite mit Koppeleinrichtungen (30) verstehen ist, die sich in im Bauteil (14) ausgebildeten komplementären Löchern (31) festlegen lassen.

12. Vorrichtung nach Anspruch 3 und 11, **dadurch gekennzeichnet, dass** die Koppeleinrichtungen zwei Zapfen (30) aufweisen, die fluchtend und auf gegenüberliegenden Seiten relativ zur Aufnahme (26) und geeignet beabstandet angeordnet sind derart, dass sie sich in zwei bestimmte Löcher (31) des Bauteils (14) einsetzen lassen, und dass die Ansetzeinrichtungen (27) sich in ein zwischenliegendes Loch (33) zwischen den beiden bestimmten Löchern (31) einsetzten lassen.

13. Vorrichtung nach einem der vorgehenden Ansprüche, **dadurch gekennzeichnet, dass** sowohl das erste Bauteil (20, 120), das zweite Bauteil (22, 122) und auch die Schwenkeinrichtung (24,124) durch Formgebung von Kunststoff erhalten worden sind.

## Revendications

1. Dispositif de fixation articulé pour relier un arbre (11) d'un ressort à gaz (12) à un composant (14) d'une structure de fermeture, comprenant un premier élément (20) destiné à être fixé audit composant (14) dans une position déterminée, un deuxième élément (22) pouvant être relié audit arbre (11) du ressort à gaz (12), et un troisième élément (24) qui comprend des moyens de pivotement (54) pour ledit deuxième élément (22), dans lequel ledit deuxième élément (22) comprend un premier siège (39) sensiblement cylindrique à l'intérieur duquel ledit troisième élément (24) est inséré, et un deuxième siège (49) sensiblement radial dans lequel l'extrémité (62, 63) dudit arbre (11) du ressort à gaz (12) peut être insérée, **caractérisé en ce que** ledit troisième élément (24) est fixé au premier élément (20) par des moyens de fixation et, en desserrant momentanément lesdits moyens de fixation, peut être tourné par rapport à celui-ci, lesdits moyens de pivotement (54) étant agencés de manière excentrée par rapport à l'axe de pivotement (51) dudit troisième élément dans ledit premier élément, et **en ce que** ledit deuxième siège (49) comprend une première partie (60) avec une forme sensiblement cylindrique pour permettre audit arbre (11) d'être inséré axialement, et une deuxième partie (61), , orthogonale à ladite première partie (60) et en communication avec celle-ci, ledit deuxième siège (49) permettant audit arbre (11) d'osciller entre une position d'insertion/de retrait et une position de travail, dans lequel ledit arbre (11) est perpendiculaire à l'axe de rotation (Y) dudit deuxième élément (22, 122), moyennant quoi ledit arbre (11) du ressort à gaz (12) peut à la fois tourner et s'incliner par rapport audit axe de rotation (Y).

2. Dispositif de fixation articulé pour relier un arbre (11) d'un ressort à gaz (12) à un composant (14) d'une structure de fermeture, comprenant un premier élément (120) destiné à être fixé audit composant (14) dans une position déterminée, un deuxième élément (122) pouvant être relié audit arbre (11) du ressort à gaz (12), et des moyens de pivotement (124) pour ledit deuxième élément (122), dans lequel ledit deuxième élément (122) comprend un premier siège (139), à l'intérieur duquel lesdits moyens de pivotement (124) sont insérés, et un deuxième siège (49) sensiblement radial, dans lequel l'extrémité (62, 63) dudit arbre (11) du ressort à gaz (12) peut être insérée, **caractérisé en ce que** lesdits moyens de pivotement comprennent un axe (124) sensiblement cylindrique réalisée en une pièce dans ledit premier élément (120) et autour duquel le deuxième élément (122) peut tourner librement, et **en ce que** ledit deuxième siège (49) comprend une première partie (60) avec une forme sensiblement cylindrique pour permettre audit arbre (11) d'être inséré axialement, et une deuxième partie (61), orthogonale à ladite première partie (60) et en communication avec celle-ci, ledit deuxième siège (49) permettant audit arbre (11) d'osciller entre une position d'insertion/de retrait et une position de travail, dans lequel ledit arbre (11) est perpendiculaire à l'axe de rotation (Y) dudit deuxième élément (122), moyennant quoi ledit arbre (11) du ressort à gaz (12) peut à la fois tourner et s'incliner par rapport audit axe de rotation (Y).

3. Dispositif selon la revendication 1, **caractérisé en ce que** ledit troisième élément (24) est fixé au moyen de moyens de fixation correspondants (27) audit premier élément (20) et **en ce que** lesdits moyens de fixation (27) sont capables d'être desserrés de manière sélective afin de permettre ladite rotation dudit troisième élément (24) autour dudit axe de pivotement (X).

4. Dispositif selon la revendication 3, **caractérisé en ce que** ledit troisième élément (24) comprend un corps principal (50) ayant une forme sensiblement cylindrique, sur la surface extérieure duquel lesdits moyens excentriques (46, 54) sont réalisés.

5. Dispositif selon la revendication 4, **caractérisé en ce que** lesdits moyens excentriques comprennent une bague circulaire (54) comportant sur son bord extérieur une pluralité de dents radiales (46).

6. Dispositif selon l'une quelconque des revendications 3 à 5 comprise, **caractérisé en ce que** ledit premier élément (20) comprend des premiers moyens de positionnement angulaire (35) capables de coopérer avec des deuxièmes moyens de positionnement angulaire correspondants (37) dudit troisième élément (24), afin de définir la position angulaire dudit troisième élément (24) autour dudit axe de pivotement (X).

7. Dispositif selon la revendication 6, **caractérisé en ce que** lesdits premiers et deuxièmes moyens de positionnement angulaire comprennent des dents ou encoches avant (35, 37) agencées à la manière de rayons autour dudit axe de pivotement (X).

8. Dispositif selon la revendication 6 ou 7, **caractérisé en ce que** lesdits premiers et deuxièmes moyens de positionnement angulaire (35, 37) sont concentriques par rapport audit axe de pivotement (X).

9. Dispositif selon l'une quelconque des revendications précédentes, **caractérisé en ce que** lesdits moyens de pivotement (24, 124) sont pourvus d'une arête circulaire (42, 142) capable de coopérer avec jeu avec un creux correspondant (40, 140) réalisé dans ledit premier siège (39, 139).

10. Dispositif selon les revendications 2 et 9, **caractérisé en ce que** ledit axe (124) est insérée par pression dans ledit premier siège (139).

11. Dispositif selon l'une quelconque des revendications précédentes, **caractérisé en ce que** ledit premier élément (20, 120) comprend un disque plan (25, 125) pourvu sur un côté de moyens d'accouplement (30) capables d'être fixés dans des trous correspondants (31) réalisés dans ledit composant (14).

12. Dispositif selon les revendications 3 et 11, **caractérisé en ce que** lesdits moyens d'accouplement comprennent deux chevilles (30), agencées alignées et sur des côtés opposés par rapport audit siège (26) et éloignées de manière appropriée l'une de l'autre de manière à être insérées dans deux trous déterminés (31) dudit composant (14), et **en ce que** lesdits moyens de fixation (27) sont capables d'être insérés dans un trou intermédiaire (33) entre lesdits deux trous déterminés (31).

13. Dispositif selon l'une quelconque des revendications précédentes, **caractérisé en ce que** ledit premier élément (20, 120) et également ledit deuxième élément (22, 122) et également lesdits moyens de pivotement (24, 124) sont obtenus en moulant une matière plastique.
